# EUROPÄISCHE PATENTSCHRIFT

(11) **EP 2 224 579 B1**
(45) Veröffentlichungstag und Bekanntmachung des Hinweises auf die Patenterteilung: **19.02.2014**
(21) Anmeldenummer: 09178031.2
(22) Anmeldetag: 04.12.2009
(51) Int. Cl.: H02K 5/15, H02K 11/02

(54) **Kfz-Aggregat Elektromotor**
Motor vehicle generator electric motor
Moteur électrique à agrégat pour véhicule automobile

(30) Priorität: 26.02.2009 DE 102009010424
(43) Veröffentlichungstag der Anmeldung: 01.09.2010
(73) Patentinhaber: Pierburg GmbH, 41460 Neuss (DE)
(72) Erfinder: Simons, Norbert, 40223 Düsseldorf (DE); Bürger, Frank, 52355 Düren (DE); Loosen, Christian, 41515 Grevenbroich (DE); Schaefer, Michael, 13353 Berlin (DE); Obenhaupt, Alexander, 38685 Langelsheim (DE)
(74) Vertreter: Patentanwälte ter Smitten Eberlein Rütten Partnerschaftsgesellschaft

(56) Entgegenhaltungen:
- DE-A1- 4 338 345
- DE-U1- 8 527 874
- GB-A- 2 113 924
- US-A1- 2004 232 784

## Beschreibung

Die Erfindung bezieht sich auf einen Kfz-Aggregat-Elektromotor, beispielsweise auf einen Stellmotor für ein Abgasrückführungs-Ventil.

Als Elektromotor für den Antrieb beziehungsweise das Stellen eines Aggregates eines einen Verbrennungsmotor aufweisenden Kraftfahrzeuges (Kfz) werden aus Kostengründen in der Regel mechanisch kommutierte Elektromotoren eingesetzt. Die elektrische Kommutierung generiert elektromagnetische Störungen, die nicht tolerierbar sind und die eine elektronische Entstörung erfordern. Unter einem Kraftfahrzeug ist vorliegend auch ein Nutzfahrzeug zu verstehen, z. B. ein Lastwagen.

Aus DE 85 27 874 A ist ein Elektromotor mit einer sogenannten externen Entstörung bekannt, bei der die elektronischen Entstörungs-Bauteile außerhalb des Schutzgehäuses des Motors angeordnet sind.

Aus DE 43 38 345 A1 ist ein Elektromotor mit einer integrierten Entstörung bekannt, wobei die elektronischen Entstörungs-Bauteile auf der Kommutator-Platine vorgesehen sind.

Aufgabe der Erfindung ist es, einen Kfz-Aggregat-Elektromotor mit modularer Entstörung zu schaffen.

Diese Aufgabe wird erfindungsgemäß gelöst durch einen Kfz-Aggregat-Elektromotor gemäß Patentanspruch 1.

Der erfindungsgemäße Kfz-Aggregat-Elektromotor weist ein elektrisch leitendes Abschirmgehäuse auf, das den Motorstator, den Motorrotor und einen mechanischen Kommutator enthält. Das bevorzugt zylindrische Abschirmgehäuse dient im Wesentlichen der elektromagnetischen Abschirmung der elektrischen Motorteile. Ferner ist ein topfförmiges und bevorzugt spritzwasserdichtes Schutzgehäuse vorgesehen, das das Abschirmgehäuse in sich aufnimmt und dem mechanischen Schutz dient. Insbesondere schützt das Schutzgehäuse vor dem Eindringen von Feuchtigkeit oder Spritzwasser in das Abschirmgehäuse.

Das bevorzugt zylindrische Schutzgehäuse weist an seinem einen axialen Längsende eine Montageöffnung zum Einsetzen des Abschirmgehäuses auf. In die Montageöffnung ist eine Abschlussplatte eingesetzt, die mehrere Funktionen erfüllt und Merkmale aufweist.

Die Abschlussplatte weist eine zentrale Wellenöffnung auf, durch die die Motor-Antriebswelle hindurchtritt. Auf der Abtriebswelle ist bevorzugt ein Zahnrad-Ritzel fixiert. Die Abschlussplatte weist ferner eine Halteausnehmung auf, in die eine axiale Fixierungsausstülpung des Abschirmgehäuses hineinragt, um das Abschirmgehäuse radial und bevorzugt auch axial in dem Schutzgehäuse zu fixieren. Die Halteausnehmung kann auch als Halteöffnung ausgebildet sein.

Die Abschlussplatte weist ein Motormasse-Kontaktelement auf, das elektrisch mit dem elektrisch leitenden Abschirmgehäuse verbunden ist, welches wiederum die Motormasse darstellt.

Die Abschlussplatte weist ein Motorphase-Kontaktelement, das mit einer Motorphase elektrisch verbunden ist, und ein elektrisches Entstörelement auf, das mit den beiden Kontaktelementen, also mit dem Motormasse-Kontaktelement und dem Motorphase-Kontaktelement verbunden ist.

Die Abschlussplatte vereint also zwei Funktionen in sich, nämlich eine tragende Funktion und eine entstörende Funktion. Durch die modulartige Ausbildung der Abschlussplatte kann die Entstörung ohne Konstruktionsänderungen an den anderen Bauteilen des Elektromotors einfach angepasst werden.

Vorzugsweise ist der mechanische Kommutator an dem der Abschlussplatte zugewandten Längsende des Abschirmgehäuses angeordnet. Das elektrische Entstörelement ist also in unmittelbarer Nähe des benachbarten Kommutators angeordnet, so dass die Entstörung größtmögliche Wirkung zeigt.

Gemäß einer bevorzugten Ausgestaltung bildet die Wellenöffnung auch die Halteausnehmung bzw. -öffnung, wobei die Fixierungsausstülpung eine axiale Zentralausstülpung des Abschirmgehäuses ist. Diese Zentralausstülpung ist bevorzugt zylindrisch und nimmt bevorzugt ein Rotor- beziehungsweise Wellenlager auf, durch das der Motorrotor drehbar in dem Abschirmgehäuse gelagert ist. Die Zentralausstülpung ragt in die zentrale Wellen- beziehungsweise Halteöffnung der Abschlussplatte hinein.

Vorzugsweise ist das Motormasse-Kontaktelement auf der proximalen Rückseite der Abschlussplatte angeordnet. Besonders bevorzugt ist das Motormasse-Kontaktelement als eine in der Querebene liegende Kontaktfläche ausgebildet, die auf einer entsprechenden gegenüberliegenden elektrischen Kontaktfläche des Abschirmgehäuses aufliegt. Das Motormasse-Kontaktelement kann beispielsweise einstückig mit dem elektrisch leitenden Abschirmgehäuse ausgebildet sein.

Gemäß einer bevorzugten Ausgestaltung ist das Entstörelement auf der proximalen Rückseite der Abschlussplatte angeordnet. Auf diese Weise ist das Entstörelement nächstmöglich zu dem Motor-Kommutator platziert, so dass die größtmögliche Entstörung erzielt wird. Besonders bevorzugt sitzt das Entstörelement auf einer Leiterbahnen-Platine, die auf der proximalen Rückseite des Abschlussplatten-Körpers angeordnet ist

Vorzugsweise weist die Abschlussplatte auf ihrer distalen Vorderseite einen mit der Motorphase elektrisch verbundenen Verbindungsstecker auf. Für jede Motorphase ist ein entsprechender Verbindungsstecker vorgesehen. Über den beziehungsweise die Verbindungsstecker und die entsprechenden Motorphase-Kontaktelemente auf der proximalen Rückseite der Abschlussplatte ist jede Motorphase mit der Außenwelt elektrisch verbindbar.

Im Folgenden wird unter Bezugnahme auf die Zeichnungen ein Ausführungsbeispiel der Erfindung näher erläutert,

### Es zeigen:

- Figur 1: einen Kfz-Aggregat-Elektromotor mit Abschirmgehäuse und Schutzgehäuse, jedoch ohne eine Abschlussplatte, in perspektivischer Ansicht auf eine Montageöffnung des Schutzgehäuses,
- Figur 2: eine Abschlussplatte in perspektivischer Ansicht, die in die Montageöffnung eingesetzt wird,
- Figur 3: den Kfz-Aggregat-Elektromotor der Figur 1 mit eingesetzter Abschlussplatte,
- Figur 4: denen Kfz-Aggregat-Elektromotor der Figur 3 in einer anderen perspektivischen Ansicht und mit aufgeschnittenem Schutzgehäuse,

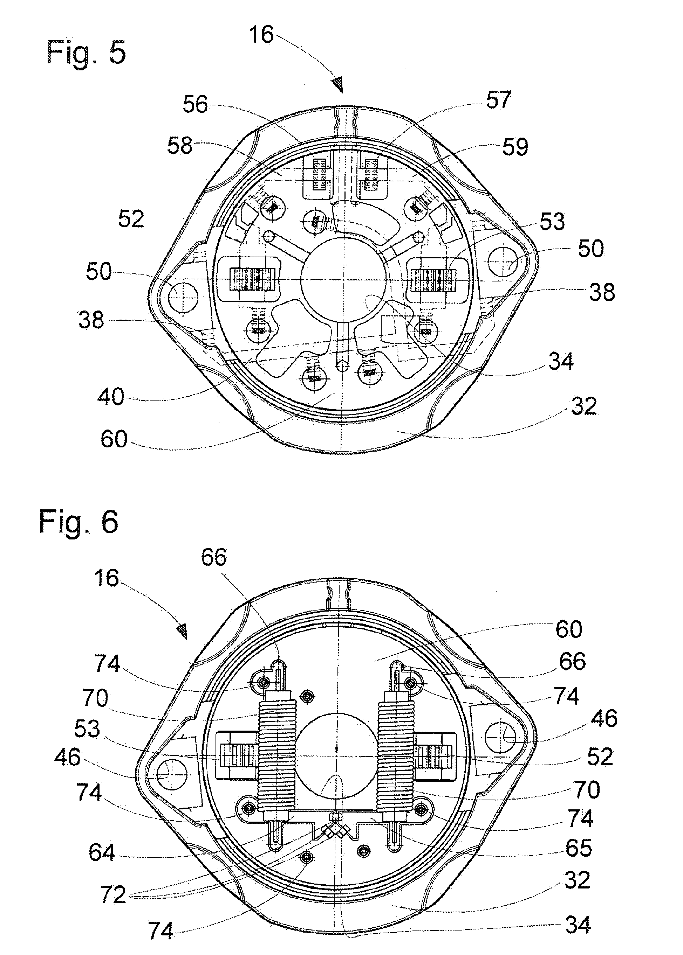

- Figur 5: die distale Vorderseite der Platine der Abschlussplatte der Figur 2, und
- Figur 6: die proximale Rückseite der Abschlussplatte der Figur 2.

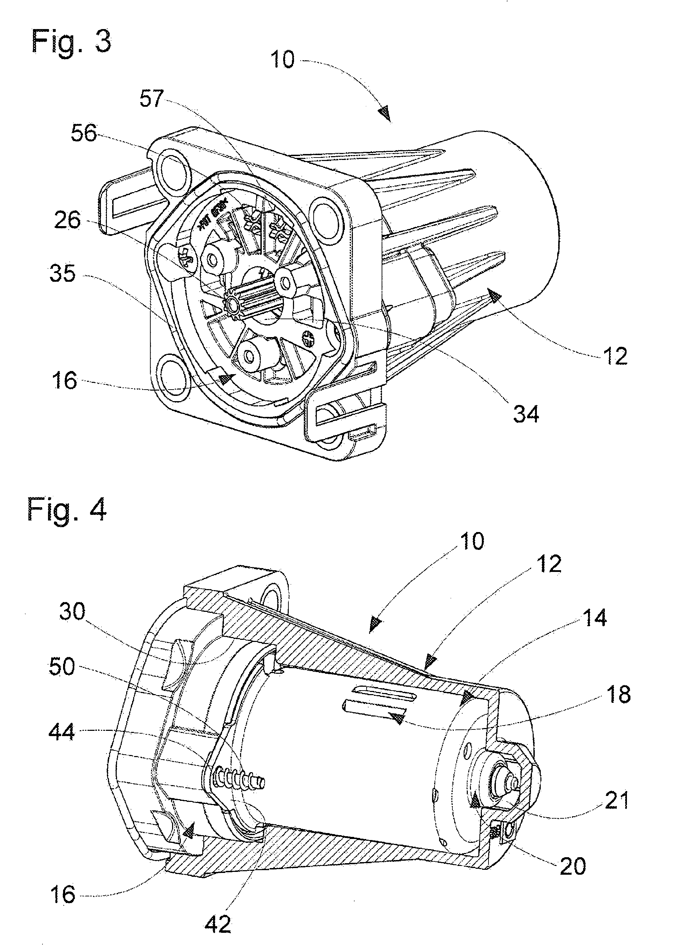

In den Figuren 3 und 4 ist ein Kfz-Aggregat-Elektromotor 10 dargestellt, wie er beispielsweise zum Antrieb eines Abgasrückführungs-Ventils dient. Der Elektromotor 10 kann als Stellantrieb für ein Stellelement oder als kontinuierlicher Antrieb für eine Pumpe u.ä. dienen.

Der Elektromotor 10 ist eine Anordnung aus mehreren Bauteilen, und weist u.a. ein äußeres flüssigkeits- und feuchtigkeitsdichtes Kunststoff-Schutzgehäuse 12, ein inneres Metall-Abschirmgehäuse 14 und eine Abschlussplatte 16 auf.

In dem Abschirmgehäuse 14 sind ein nicht dargestellter Motorstator und Motorrotor sowie ein mechanischer Kommutator angeordnet. Die Motorspulen können rotor- und/oder statorseitig angeordnet sein. Die Umpolung der Motorspulen erfolgt durch den mechanischen Kommutator. Der Kommutator erzeugt im Betrieb elektromagnetische Störungen, die durch Entstörmaßnahmen verringert werden müssen. Ein Element der Entstörung ist das elektrisch leitende Abschirmgehäuse 14, das Öffnungen 18 zur Verbesserung des Wärmeaustausches aufweisen kann.

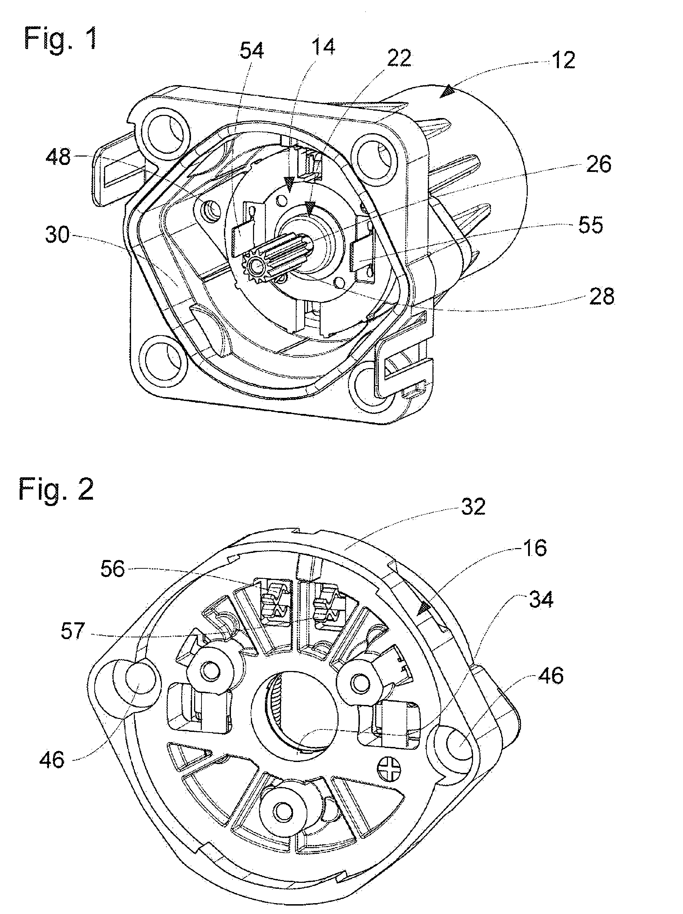

Das Abschirmgehäuse 14 weist an seinem einen axialen Längsende eine Ausstülpung 20 auf, in der ein erstes Lager zur Lagerung des Motorrotors sitzt. An dem anderen axialen Abschirmgehäuse- Längsende, das in der Figur 1 dargestellt ist, weist das Abschirmgehäuse 14 eine Zentralausstülpung 22 auf, deren Stirnseite für den Durchtritt einer Motor-Abtriebswelle 26 eine Abschirmgehäuse-Wellenöffnung 24 aufweist, In der Zentralausstülpung 22 sitzt ein zweites Lager zur Lagerung des Motorrotors. Auf der Abtriebswelle 26 sitzt ein Abtriebswellen-Ritzel 28.

Das Schutzgehäuse 12 besteht im Wesentlichen aus Kunststoff, kann jedoch für die verbesserte Wärmeabführung auch Teile aus einem wärmeleitenden Material, beispielsweise aus Metall aufweisen. Das Schutzgehäuse 12 weist an einem Längsende eine Montageöffnung 30 auf, durch die das Abschirmgehäuse 14 in das Schutzgehäuse 12 eingesteckt ist, und in die die Abschlussplatte 16 eingesetzt ist, wie in den Figuren 3 und 4 dargestellt ist. Das Schutzgehäuse 12 ist staub- und spritzwassergeschützt, bevorzugt aber feuchtigkeits- und flüssigkeitsdicht.

Die Abschlussplatte 16 wird von einem komplexen Kunststoffkörper 32mit einer Wellenöffnung 34 gebildet, die gleichzeitig als Halteausnehmung 34 für die Zentralausstülpung 22 dient. Die Halteausnehmung und die Wellenöffnung können aber auch separat von einander ausgebildet sein. Durch die Wellenöffnung 34 tritt die Abtriebswelle 26 einschließlich des Ritzels 28 hindurch. Die Abschlussplatte 16 weist auf ihrer proximalen Rückseite zwei Motormasse-Kontaktelemente 38 auf, die durch eine in dem Kunststoffkörper 32 vergossene Motormasse-Leitung 40 miteinander verbunden sind. Die beiden Motormasse-Kontaktelemente 38 sind als in der Querebene liegende relativ großflächige Kontaktflächen ausgebildet.

Das Abschirmgehäuse 14 weist zwei metallische Kontaktzungen 42 auf, die das Motormasse-Potential führen und mit den Kontaktelementen 38 der Abschlussplatte 16 elektrisch in Kontakt stehen. Die Kontaktzungen 42 weisen jeweils eine Schraubenöffnung 44 auf, die mit der entsprechenden Schraubenöffnung 46 der Abschlussplatte 16 und den beiden Gewindebohrungen 48 des Schutzgehäuses 12 fluchten. Durch zwei Befestigungsschrauben 50 werden die beiden Kontaktzungen 42 fest auf die beiden Kontaktelemente 38 gedrückt. Die Kontaktzungen 42 und die Kontaktelemente 38 bilden in der Querebene liegende Kontaktflächen.

Auf der proximalen Rückseite der Abschlussplatte 16 sind ferner zwei Motorphasen-Kontaktelemente 52, 53 angeordnet, die mit entsprechenden Motorphasen-Kontaktzungen 54, 55 des Kommutators in dem Abschirmgehäuse 14 zusammengesteckt sind. Ferner weist die Abschlussplatte 16 zwei zur Vorderseite orientierte Verbindungsstecker 56, 57 zum Anschluss an eine Betriebsspannung auf, die durch entsprechende Leiterbahnen 58,59 mit den beiden Motorphasen-Kontaktelementen 52, 53 verbunden sind, und durch die die Motorphasen elektrisch mit der Betriebsspannung verbunden werden können.

Auf der proximalen Rückseite des Kunststoffkörpers 32 ist eine Leiterbahnen-Platine 60 fixiert, die über fünf oder mehr elektrisch leitende sogenannte Press-Fit-Kontakte 74 an dem Kunststoffkörper 32 gehalten wird, die die elektrische Verbindung zwischen den Motorphasen- und Motormasse-Kontaktelementen 56, 57, 38 einerseits und den Leiterbahnen 64, 65, 66 auf der Platine 60 andererseits herstellen. Zwischen den Leiterbahnen 64, 65, 66 sind elektrische Entstörelemente 70,72 in Form von Drosselspulen 70 und Kondensatoren 72 angeordnet, die für die Entstörung sorgen.

Bei der Montage wird zunächst das Abschirmgehäuse 14 in das Schutzgehäuse 12 vollständig eingesetzt. Hierbei verklemmt sich die rückseitige zentrale Ausstülpung 20 des Abschirmgehäuses 14 in der entsprechenden Ausnehmung 21 des Schutzgehäuses 12, Anschließend wird die Abschlussplatte 16 derart in das Schutzgehäuse 12 eingesetzt, dass die Motorphasen-Kontaktelemente 52,53 mit den Motorphasen-Kontaktzungen 54,55 und die korrespondierenden Motormasse-Kontaktelemente 38,42 miteinander elektrisch kontaktiert werden. Hierbei wird ferner die Zentralausstülpung 22 des Abschirmgehäuses 14 in die Halteausnehmung 34 gesteckt. Anschließend wird die Abschlussplatte 16 in durch zwei Gewindeschrauben 50 an dem Schutzgehäuse 12 fixiert.

## Patentansprüche

1. Kfz-Aggregat-Elektromotor (10) mit
einem elektrisch leitenden Abschirmgehäuse (14), das einen Motorstator, einen Motorrotor und einen mechanischen Kommutator enthält, und
einem topfförmigen und spritzwasserdichten Schutzgehäuse (12), in das das Abschirmgehäuse (14) eingesetzt ist, wobei
das Schutzgehäuse (12) an seinem einen axialen Ende eine Montageöffnung (30) zum Einsetzen des Abschirmgehäuses (14) aufweist, und
in die Montageöffnung (30) eine Abschlussplatte (16) eingesetzt ist, wobei die Abschlussplatte (16) aufweist:
eine zentrale Wellenöffnung (34), durch die eine Motor-Abtriebswelle (26) hindurchtritt,
eine Halteausnehmung (34), durch die eine axiale Fixierungsausstülpung (22) des Abschirmgehäuses (14) hindurchragt, um dieses in dem Schutzgehäuse (12) zu tragen,
ein Motormasse-Kontaktelement (38), das elektrisch mit dem Abschirmgehäuse (14) verbunden ist, und
ein Motorphasen-Kontaktelement (52,53), das mit einer Motorphase elektrisch verbunden ist,
**dadurch gekennzeichnet,**
**dass** die Abschlussplatte (16) ein elektrisches Entstörelement (70,72) aufweist, das mit den Kontaktelementen (52,53) verbunden ist.

2. Kfz-Aggregat-Elektromotor (10) nach Anspruch 1, wobei die Wellenöffnung (34) auch die Halteausnehmung (34) bildet.

3. Kfz-Aggregat-Elektromotor (10) nach Anspruch 1 oder 2, wobei die Fixierungsausstülpung (22) eine axiale Zentralausstülpung (22) des Abschirmgehäuses (14) ist.

4. Kfz-Aggregat-Elektromotor (10) nach Anspruch 3, wobei in der Zentralausstülpung (22) ein Wellenlager sitzt.

5. Kfz-Aggregat-Elektromotor (10) nach einem der vorangegangenen Ansprüche, wobei der Kommutator an dem der Abschlussplatte (16) zugewandten Längsende des Abschirmgehäuses (14) angeordnet ist.

6. Kfz-Aggregat-Elektromotor (10) nach einem der vorangegangenen Ansprüche, wobei das Motormasse-Kontaktelement (38) auf der proximalen Rückseite der Abschlussplatte (16) angeordnet ist.

7. Kfz-Aggregat-Elektromotor (10) nach einem der vorangegangenen Ansprüche, wobei das Motormasse-Kontaktelement (38) als eine in der Querebene liegende Kontaktfläche ausgebildet ist, die auf einer entsprechenden gegenüberliegenden Kontaktfläche (41) des Abschirmgehäuses (14) aufliegt.

8. Kfz-Aggregat-Elektromotor (10) nach einem der vorangegangenen Ansprüche, wobei das Entstörelement (70,72) auf der Rückseite der Abschlussplatte in (16) angeordnet ist.

9. Kfz-Aggregat-Elektromotor (10) nach einem der vorangegangenen Ansprüche, wobei die Abschlussplate (16) auf ihrer Vorderseite einen mit der Motorphase verbundenen Verbindungsstecker (56,57) aufweist.

## Claims

1. Electric motor (10) for a motor vehicle aggregate, comprising
an electrically conductive shielding housing (14) accommodating a motor stator, a motor rotor and a mechanical commutator, and
a pot-shaped and splash-proof protective housing (12) into which the shielding housing (14) is inserted, wherein
the protective housing (12) has a mounting opening (30) at one of its axial ends for the insertion of the shielding housing (14), and
a cover plate (16) is inserted into the mounting opening (30), the cover plate (16) comprising:
a central shaft opening (34) through which a motor output shaft (26) passes;
a holding recess (34) through which an axial fixing projection (22) of the shielding housing (14) extends to support the same In the protective housing (12),
a motor ground contact element (38) electrically connected with the shielding housing (14), and
a motor phase contact element (52, 53) electrically connected with a motor phase,
**characterized in that**
the cover plate (16) comprises an electric suppressor element (70, 72) connected with the contact elements (52, 53),

2. Electric motor (10) for a motor vehicle aggregate of claim 1, wherein the shaft opening (34) also forms the holding recess (34).

3. Electric motor (10) for a motor vehicle aggregate of claim 1 or 2, wherein the fixing projection (22) is an axial central projection (22) of the shielding housing (14).

4. Electric motor (10) for a motor vehicle aggregate of claim 3, wherein a shaft bearing sits in the central projection (22).

5. Electric motor (10) for a motor vehicle aggregate of one of the preceding claims, wherein the commutator is arranged at the longitudinal end of the shielding housing (14) facing the cover plate (16).

6. Electric motor (10) for a motor vehicle aggregate of one of the preceding claims, wherein the motor ground contact element (38) is arranged on the proximal rear side of the cover plate (16).

7. Electric motor (10) for a motor vehicle aggregate of one of the preceding claims, wherein the motor ground contact element (38) is configured as a contact surface situated in the transverse plane, the surface resting on a corresponding opposite contact surface (41) of the shielding housing (14).

8. Electric motor (10) for a motor vehicle aggregate of one of the preceding claims, wherein the suppressor element (70, 72) is arranged on the rear side of the cover plate (16).

9. Electric motor (10) for a motor vehicle aggregate of one of the preceding claims, wherein the cover plate (16) has a connector plug (56, 57) on its front face, which is connected with the motor phase.

## Revendications

1. Moteur électrique (10) à agrégat pour véhicule automobile, comprenant
un boitier de blindage (14) conducteur électrique logeant un stator de moteur, un rotor de moteur et un commutateur mécanique, et
un boitier de protection (12) en forme de pot et étanche aux projections d'eau, inséré dans ledit boitier de blindage (14),
ledit boitier de protection (12) comprenant, à une de ses extrémités axiales, une ouverture de montage (30) pour l'insertion dudit boitier de blindage (14), et
une plaque de fermeture (16) étant insérée dans ladite ouverture de montage (30), ladite plaque de fermeture (16) comprenant:
une ouverture centrale (34) pour arbre à travers laquelle passe un arbre de sortie (26) du moteur,
un évidement de retenue (34) à travers lequel passe une saillie axiale de fixation (22) prévue sur ledit boitier de blindage (14), afin de supporter celui-ci dans ledit boitier de protection (12),
un élément de contact (38) à la masse du moteur, relié électriquement au boitier de blindage (14), et
un élément de contact (52, 53) à la phase du moteur, relié électriquement à une phase du moteur,
**caractérisé en ce que**
la plaque de fermeture (16) comprend un élément de suppression électrique (70, 72) relié aux éléments de contact (52, 53).

2. Moteur électrique (10) à agrégat pour véhicule automobile selon la revendication 1, dans lequel ladite ouverture (34) pour arbre forme également l'évidement de retenue (34).

3. Moteur électrique (10) à agrégat pour véhicule automobile selon les revendications 1 ou 2, dans lequel la saillie de fixation (22) est une saillie centrale axiale (22) dudit boitier de blindage (14).

4. Moteur électrique (10) à agrégat pour véhicule automobile selon la revendication 3, dans lequel un palier d'arbre est logé dans ladite saillie centrale (22).

5. Moteur électrique (10) à agrégat pour véhicule automobile selon l'une quelconque des revendications précédentes, dans lequel le commutateur est situé à l'extrémité longitudinale dudit boitier de blindage (14) éloignée de la plaque de fermeture (16).

6. Moteur électrique (10) à agrégat pour véhicule automobile selon l'une quelconque des revendications précédentes, dans lequel ledit élément de contact (38) à la masse du moteur est disposé sur la face arrière proximale de ladite plaque de fermeture (16).

7. Moteur électrique (10) à agrégat pour véhicule automobile selon l'une quelconque des revendications précédentes, dans lequel ledit élément de contact (38) à la masse du moteur est réalisé en forme d'une surface de contact située dans le plan transversal, portant sur une surface de contact (41) opposée correspondante dudit boitier de blindage (14).

8. Moteur électrique (10) à agrégat pour véhicule automobile selon l'une quelconque des revendications précédentes, dans lequel ledit élément de suppression (70, 72) est disposé sur la face arrière de la plaque de fermeture (16).

9. Moteur électrique (10) à agrégat pour véhicule automobile selon l'une quelconque des revendications précédentes, dans lequel la plaque de fermeture (16) comprend sur sa face avant un connecteur (56, 57) relié à la phase du moteur.
